# EUROPÄISCHE PATENTSCHRIFT

(11) **EP 2 060 883 B1**
(45) Veröffentlichungstag und Bekanntmachung des Hinweises auf die Patenterteilung: **24.08.2016**
(21) Anmeldenummer: 07120998.5
(22) Anmeldetag: 19.11.2007
(51) Int. Cl.: G01S 7/03, G01S 13/88, H01Q 1/22, H01Q 1/42, H01Q 13/02, G01F 23/28, G01F 23/284

(54) **Füllstandsensor für kurze Messentfernungen**
Fuel level sensor for short measuring distances
Tissu d'origine animale biocréé adapté pour être utilisé en tant que substitut de cuir

(43) Veröffentlichungstag der Anmeldung: 20.05.2009
(73) Patentinhaber: VEGA Grieshaber KG, 77709 Wolfach (DE)
(72) Erfinder: Fehrenbach, Josef, 77716, Haslach (DE); Griessbaum, Karl, 77796, Mühlenbach (DE); Kienzle, Klaus, 77736, Zell am Harmersbach (DE); Schultheiß, Daniel, 78132, Hornberg (DE)
(74) Vertreter: Maiwald Patentanwalts GmbH

(56) Entgegenhaltungen:
- EP-A- 0 444 834
- EP-A- 0 957 371
- EP-A- 1 674 882
- WO-A-2007/042324
- DE-A1- 2 312 145
- US-A- 5 420 589

## Beschreibung

Die vorliegende Erfindung betrifft die Füllstandsmessung. Insbesondere betrifft die vorliegende Erfindung einen Füllstandssensor für kurze Entfernungsmessungen, ein Antennensystems für einen Füllstandsensor, die Verwendung eines Füllstandsensors zur Füllstandsmessung und die Verwendung eines Antennensystems zur Füllstandsmessung.

Bisherige Füllstandsmessgeräte haben aufgrund ihres Aufbaus bei kurzen Entfernungen zur Füllgutoberfläche (bis ca. 1,5 m) eine schlechtere Genauigkeit als bei Entfernungen von über 2 m zur Füllgutoberfläche. Diese Ungenauigkeiten können beispielsweise durch das sog. Antennenklingeln entstehen, das aus Mehrfachreflexionen zwischen dem Hochfrequenzmodul, der Antenneneinkopplung und dem Antennenrand besteht. Diese Reflexionen ragen bis in den Messbereich des Sensors hinein und verursachen dort einerseits Interferenzen mit einer Reflexion bzw. einem Echo einer Füllgutoberfläche oder sie reduzieren sogar die Messempfindlichkeit für kleine Reflexionen von der Füllgutoberfläche.

Man spricht hier auch von einem "Totbereich", in dem der Sensor Echos nicht oder nur sehr schwer erkennen kann.

Bekannte Radarsensoren zur Füllstandsmessung weisen eine gemeinsame Antenne für Sender und Empfänger auf. Bei solchen Sensoren kann durch eine endliche Reflexionsdämpfung der Antenne bzw. der Antenneneinkopplung zwischen dem Hochfrequenzmodul und der Antenne ein sog. Totbereich entstehen, in dem zum einen die Empfindlichkeit deutlich reduziert ist und zum anderen durch Interferenzen der Reflexionen des Antennensystems mit den Reflexionen der Füllgutoberfläche die Messgenauigkeit stark reduziert wird.

EP 1 674 882 A1 beschreibt ein Abstandradar für ein Fahrzeug, welches eine Sendeantenne und eine Empfangsantenne aufweist.

EP 0 444 834 A2 beschreibt ein Füllstandradar mit zwei Antennen, das für Hochtemperaturanwendungen ausgeführt ist und hierfür eine Wasserkühlung aufweist.

Es ist eine Aufgabe der vorliegenden Erfindung, eine verbesserte Messqualität im Nahbereich eines Füllstandsensors bereitzustellen.

Es sind ein Füllstandsensor für kurze Entfernungsmessungen, ein Antennensystem für einen Füllstandsensor, die Verwendung eines Füllstandsensors zur Füllstandsmessung sowie die Verwendung eines Antennensystems zur Füllstandsmessung gemäß den Merkmalen der unabhängigen Ansprüche angegeben. Weiterbildungen der Erfindung ergeben sich aus den Unteransprüchen.

Gemäß einem Ausführungsbeispiel der vorliegenden Erfindung ist ein Füllstandsensor für kurze Entfernungsmessungen angegeben, welcher eine erste Antenne zum Senden eines Sendesignals zu einer Füllgutoberfläche, eine zweite Antenne zum Empfangen eines von der Füllgutoberfläche reflektierten Empfangssignals und eine gemeinsame Außenhülle für die erste und die zweite Antenne aufweist.

Ein solcher Füllstandsensor eignet sich durch einen deutlich reduzierten "Totbereich" besonders gut für genaue Messungen im Nahbereich und ist somit auch in kleinen Behältern einsetzbar.

Durch die Integration zweier Antennen in eine gemeinsame "Außenhülle" oder in ein gemeinsames Gehäuse oder durch zwei Antennen mit einer gemeinsamen Außenkontur ergibt sich ein kompakter Aufbau, der auch noch durch kleine Behälteröffnungen hindurchpasst.

Gemäß einem weiteren Ausführungsbeispiel der vorliegenden Erfindung ist die gemeinsame Außenhülle als ein Gehäuse ausgeführt, welches zur Aufnahme der ersten und zweiten Antenne ausgeführt ist.

Auf diese Weise kann die Stabilität des Antennensystems des Sensors erhöht werden.

Die gemeinsame Außenhülle kann zum Beispiel aus einem Kunststoff hergestellt werden. Im Falle von PTFE (Poly-Tetra-Fluor-Ethylen) erhält man damit eine sehr hohe chemische Beständigkeit.

Gemäß einem weiteren Ausführungsbeispiel der vorliegenden Erfindung weist die gemeinsame Außenhülle bzw. das Gehäuse eine runde, elliptische oder eckige Grundfläche auf.

Beispielsweise ist die Grundfläche der gemeinsamen Außenhülle oder des Gehäuses an den Öffnungsquerschnitt der beiden Antennen angepasst. Weisen beispielsweise die beiden Antennen jeweils einen halbrunden Öffnungsquerschnitt auf, so kann die Grundfläche der Außenhülle kreisrund oder beispielsweise auch elliptisch ausgestaltet sein.

Durch den halbrunden Öffnungsquerschnitt der beiden Antennen wird die Grundfläche der Außenhülle optimal ausgenutzt. Eine großer Öffnungsquerschnitt der Antennen bedeutet eine höhere Bündelung (kleinerer Öffnungswinkel) und einen höheren Antennengewinn.

Gemäß einem weiteren Ausführungsbeispiel der vorliegenden Erfindung weisen die erste und zweite Antenne jeweils einen runden, elliptischen oder eckigen Öffnungsquerschnitt auf.

Weiterhin weist, gemäß einem weiteren Ausführungsbeispiel der vorliegenden Erfindung, die gemeinsame Außenhülle eine zylindrische oder kegelförmige Außenform auf.

Gemäß einem weiteren Ausführungsbeispiel der vorliegenden Erfindung sind die ersten und zweiten Antennen als Hornantennen ausgeführt.

Die Hornantennen haben den Vorteil guter elektrischer Eigenschaften, wie z.B. einem großen Flächenwirkungsgrad gegenüber anderer Antementypen. Dieser Flächenwirkungsgrad leigt üblicherweise bei mindestens 60%.

Gemäß einem weiteren Ausführungsbeispiel weisen die erste und zweite Antenne jeweils ein Antennenhorn mit halbkreisförmigem oder halbelliptischem Querschnitt auf. Damit können die Grundfläche der Außenhülle optimal ausgenutzt und ein minimaler Öffnungswinkel bzw. ein maximaler Antennengewinn der Antennen erzielt werden.

Gemäß einem weiteren Ausführungsbeispiel der vorliegenden Erfindung ist der Füllstandsensor als Füllstandsradarsensor ausgeführt.

Gemäß einem weiteren Ausführungsbeispiel der vorliegenden Erfindung ist ein Antennensystems für einen Füllstandsensor für kurze Entfernungsmessungen angegeben, wobei das Antennensystem eine erste Antenne zum Senden eines Sendesignals zu einer Füllgutoberfläche, eine zweite Antenne zum Empfangen eines von der Füllgutoberfläche reflektierten Empfangssignals und eine gemeinsame Außenhülle für die erste und zweite Antenne aufweist.

Die beschriebenen Ausführungsbeispiele betreffen gleichermaßen das Antennensystem, den Füllstandsensor sowie die Verwendung des Antennensystems und des Füllstandsensors zur Füllstandsmessung.

Gemäß einem weiteren Ausführungsbeispiel der vorliegenden Erfindung ist das Antennensystem einteilig ausgeführt. Auf diese Weise kann die Stabilität des Antennensystems erhöht werden.

Außerdem ist hierdurch eine einfache Herstellbarkeit durch z.B. Spritzgießen aus Kunststoff möglich. Bereiche, die leitfähig sein müssen (Kegelfläche der Hornantenne), können mit einer Metallisierung beschichtet werden.

Gemäß einem weiteren Ausführungsbeispiel der Erfindung weisen die erste und zweite Antenne jeweils ein Antennenhorn mit halbkreisförmigem oder halbelliptischem Querschnitt auf.

Gemäß einem weiteren Ausführungsbeispiel der Erfindung weist der Füllstandssensor weiterhin eine vordere Antennenabdeckung mit einer nach innen gerichtete Wölbung auf.

Gemäß einem weiteren Ausführungsbeispiel der Erfindung ist die Wölbung der Antennenabdeckung kegelförmig ausgeführt.

Gemäß einem weiteren Ausführungsbeispiel der Erfindung ist das Antennensystem zum frontbündigen Einbau in einen Flansch ausgeführt.

Gemäß einem weiteren Ausführungsbeispiel der vorliegenden Erfindung ist die Verwendung eines oben beschriebenen Füllstandsensors zur Füllstandsmessung angegeben.

Gemäß einem weiteren Ausführungsbeispiel der vorliegenden Erfindung ist die Verwendung eines oben beschriebenen Antennensystems zur Füllstandsmessung angegeben.

Gemäß einem weiteren Ausführungsbeispiel der vorliegenden Erfindung ist die Abdeckung der Antenne z.B. kegelförmig nach innen gewölbt und am äußeren Rand mit einer Abtropfkante versehen, an der sich Kondensat sammeln und abtropfen kann.

Im Folgenden werden mit Verweis auf die Figuren bevorzugte Ausführungsbeispiele der Erfindung beschrieben.
Fig. 1 zeigt einen Radarsensor mit getrennten Planarantennen für Sender und Empfänger.
Fig. 2 zeigt eine schematische Darstellung von zwei Hornantennen gemäß einem Ausführungsbeispiel der vorliegenden Erfindung.
Fig. 3A und 3B zeigen ein Antennensystem mit zueinander geneigten Hornantennen gemäß einem weiteren Ausführungsbeispiel der vorliegenden Erfindung.
Fig. 4A und 4B zeigen Antennensystem mit zwei halben Hornantennen gemäß einem weiteren Ausführungsbeispiel der vorliegenden Erfindung.
Fig. 5 zeigt ein Antennensystem mit zwei halben Hornantennen, die direkt nebeneinander angeordnet sind, gemäß einem weiteren Ausführungsbeispiel der vorliegenden Erfindung.
Fig. 6 zeigt ein Antennensystem mit zwei gebogenen Hornantennen gemäß einem weiteren Ausführungsbeispiel der vorliegenden Erfindung.
Fig. 7 zeigt eine schematische Querschnittsdarstellung eines Antennensystems mit zwei halben Hornantennen gemäß einem weiteren Ausführungsbeispiel der vorliegenden Erfindung.
Fig. 8 zeigt ein Füllstandsmessgerät oder Füllstandsensor gemäß einem weiteren Ausführungsbeispiel der vorliegenden Erfindung.
Fig. 9 zeigt eine schematische Darstellung von Polarisationsebenen der Sende- und Empfangssignale gemäß einem Ausführungsbeispiel der vorliegenden Erfindung.
Fig. 10 zeigt eine schematische Darstellung von Polarisationsebenen der Sende- und Empfangssignale gemäß einem weiteren Ausführungsbeispiel der vorliegenden Erfindung.

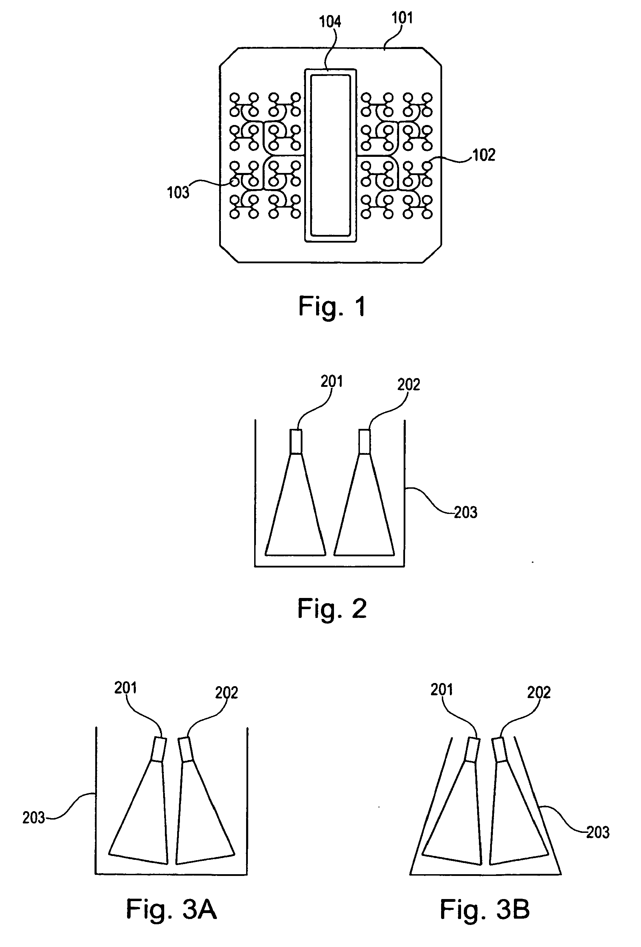

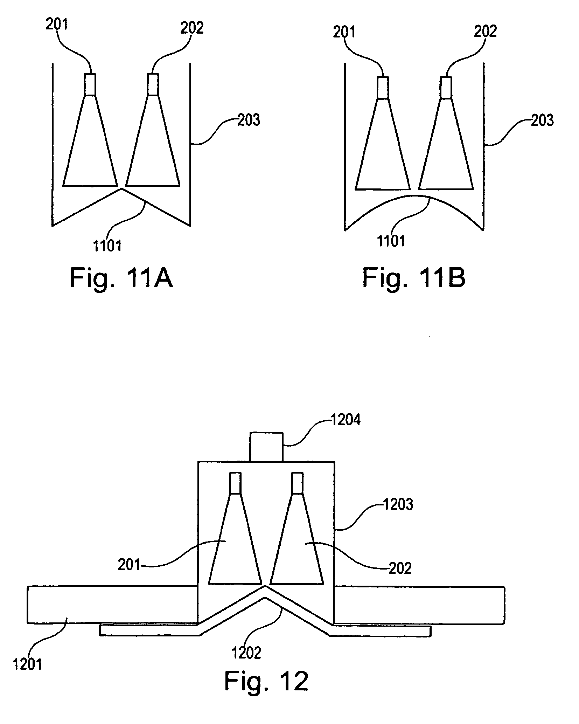

Fig. 1 I A und Fig. 11 B zeigen ein Antennensystem mit nach innen gewölbter Abdeckung 1101 der Antennen gemäß einem weiteren Ausführungsbeispiel der vorliegenden Erfindung.
Fig. 12 zeigt ein Antennensystem mit fi-ontbündigem Einbau gemäß einem weiteren Ausführungsbeispiel der vorliegenden Erfindung.

Die Darstellungen in den Figuren sind schematisch und nicht maßstäblich.

In der folgenden Figurenbeschreibung werden für die gleichen oder ähnlichen Elemente die gleichen Bezugsziffern verwendet.

Fig. 1 zeigt einen Radarsensor mit getrennten Planarantennen 102, 103 für Sender und Empfänger. Die 1'lanarantennen 102, 103 sind auf einer Leiterplatte 101 angeordnet. Weiterhin ist ein Elektronikmodul 104 vorgesehen.

Da die planaren Antennen 102, 103 zusammen mit der Mikrowellenschaltung 104 auf dem Substrat 101 angeordnet sind, ist die I'rozesstemperatur deutlich eingeschränkt, weil die elektronischen Bauteile der vollen Temperatur des Behälters ausgesetzt sind.

Fig. 2 zeigt ein Antennensystem mit einer ersten Hornantenne 201 und einer zweiten Hornantenne 202, die nebeneinander in einem gemeinsamen Gehäuse 203 angeordnet sind. Die Querschnittsflächen der Antennenhörner sind hierbei beispielsweise rund oder elliptisch.

Fig. 3A zeigt ein Antennensystem gemäß einem weiteren Ausführungsbeispiel der vorliegenden Erfindung, in welchem die "normalen" Hornantennen 201, 202 zueinander geneigt angeordnet sind. Der Behälter weist beispielsweise eine zylindrische Form auf, deren Querschnitt an die Öffnungsquerschnitte der Antennen 201, 202 angepasst ist.

Fig. 3B zeigt ein weiteres Ausführungsbeispiel eines Antennensystems, bei dem die beiden Hornantenne 201, 202 ebenfalls zueinander geneigt angeordnet sind. Hierbei ist das gemeinsame Gehäuse 203 an die Neigung der Antennen angepasst, läuft also beispielsweise nach oben hin kegelförmig zusammen.

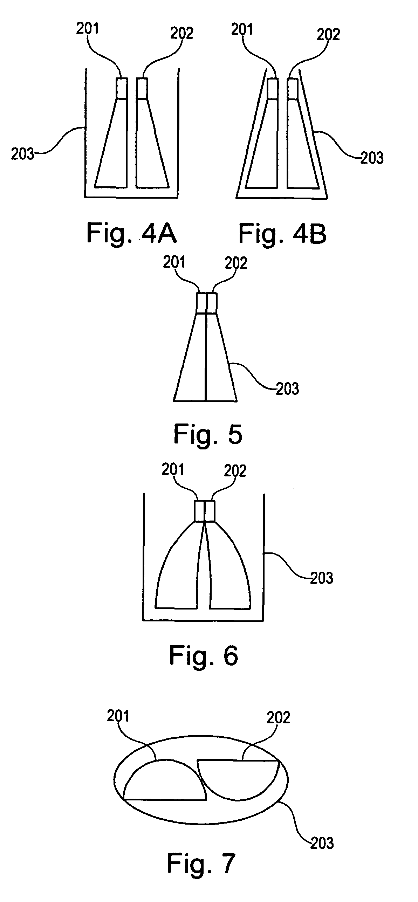

Fig. 4A zeigt ein weiteres Ausführungsbeispiel eines Antennensystems gemäß der vorliegenden Erfindung, bei dem zwei "ilalbe" Hornantenne 201, 202 nebeneinander in dem Gehäuse 203 angeordnet sind. Hier ist das Gehäuse beispielsweise zylinderförmig ausgeführt.

Fig. 4B zeigt ein weiteres Ausführungsbeispiel der vorliegenden Erfindung, bei dem die beiden ;,halben" Hornantennen 201, 202 ebenfalls nebeneinander angeordnet sind und auch wie in dem Ausführungsbeispiel der Fig. 4A einen halbkreisförmigen oder halbelliptischen Querschnitt aufweisen. Das Gehäuse 203 läuft nach oben hin zusammen und ist beispielsweise an die Außenform der Hornantennen 201, 202 angepasst, indem es einen kreisförmigen bzw. elliptischen Querschnitt aufweist.

Fig. 5 zeigt ein weiteres Ausführungsbeispiel eines Antennensystem gemäß einem weiteren Ausführungsbeispiel der vorliegenden Erfindung, bei dem die beiden Hornantennen 201, 202 direkt nebeneinander angeordnet sind, so dass sie eine gemeinsame Außenform wie bei einer normalen Hornantenne ausbilden. In diesem Fall sind die beiden Hornantennen 201, 202 beispielsweise mit einem halbkreisförmigen oder halbelliptischen Querschnitt ausgeführt ("halbe" Hornantennen).

Fig. 6 zeigt ein Antennensystem gemäß einem weiteren Ausführungsbeispiel der vorliegenden Erfindung, bei dem die beiden Hornantenne 201, 202 gebogen ausgefülut sind.

Fig. 7 zeigt ein Antennensystem gemäß einem weiteren Ausführungsbeispiel der vorliegenden Erfindung, in einer Ansicht von unten, also auf die Öffnungen der Hornantennen 201, 202. Es sind zwei "halbe" Hornantennen 201, 202 vorgesehen, die jeweils einen halbkreisförmigen oder halbelliptischen Querschnitt aufweisen. Die beiden Hornantennen sind seitlich nebeneinander, zueinander verdreht angeordnet. Das gemeinsame Gehäuse 203 weist beispielsweise einen elliptischen Querschnitt auf.

Fig 11 A und 11 B zeigen ein Antennensystem mit nach innen gewölbter Abdeckung 1 I O1 der Antennen. Durch diese Ausführung kann Kondensat, das sich an der vorderen Abdeckung sammelt zum Rand hin ablaufen und dort abtropfen. Die Wölbung 1101 kann beispielsweise kegelförmig oder rund ausgefühi-t sein.

Die nach innen gewölbte Abdeckung hat gegenüber der Wölbung nach außen (z.B. Abtropfspitzc in der Mitte) den Vorteil einer wesentlich höheren Entkopplung (ca. 15dB besser) der beiden Antennen.

Fig 12 zeigt ein Antennensystem mit frontbündigem Einbau. Das gemeinsame Gehäuse besthet dabei aus einem Flansch 1201, einer Kunststoffabdeckung 1202 und einem Umgehäuse 1203. Das Anschlussstück 1204 bildet die Verbindung zum Elektronikgehäuse (nicht dargestellt).

Diese Ausführung eignet sich besonders für kleine Behälter ohne Stutzen, da der Sensor nicht in den Behälter hineinragt und dadurch den möglichen Messbereich zusätzlich verringert.

Gemäß den Ausführungsbeispielen der Erfindung werden die beiden Hornantennen zusammen in einem beispielsweise zylindrischen, elliptischen oder kegelförmige Gehäuse nebeneinander angeordnet. Eine bevorzugte Lösung ist das kegelförmige Antennengehäuse, da sich hier der Durchmesser an der Antennenvorderkante zum Antennenanschluss hin verjüngt und sich damit leicht an bereits vorhandene Elektronikgehäuse anschließen lässt.

Die beiden Antennen können einen runden, halbrunden, elliptischen oder eckigen Öffnungsquerschnitt aufweisen, so dass sie die zum Medium weisende Fläche des Antennengehäuses optimal ausnutzen. Dadurch können der maximal mögliche Antennengewinn und der minimale öffnungswinkel bei vorgegebener Fläche erreicht werden.

Vorteile sind insbesondere eine gute Entkopplung zwischen Sende- und Empfangsantenne, eine kompakte Bauweise des Antennensystems, ein geringer "Totbereich" und somit eine gute Genauigkeit und Empfindlichkeit im Nahbereich sowie eine sehr gute Eignung für kleine Behälter.

Als weitere Antennenformen kommen auch Parabolantennen in Betracht.

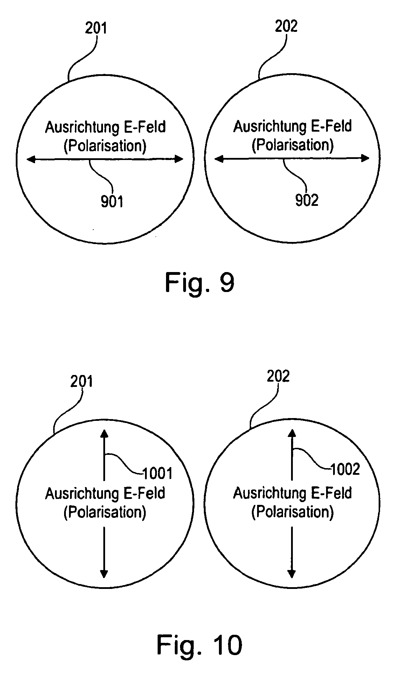

Fig. 9 zeigt eine schematische Darstellung von Polarisationsebenen der Sende- und Empfangssignale gemäß einem Ausführungsbeispiel der vorliegenden Erfindung.

Die Bezugszeichen 901 und 902 zeigen die Polarisationsebenen des elektrischen Feldes des Sendesignals (Sendeantenne 201) bzw. des Empfangssignals (Empfangsantenne 202).

Fig. 10 zeigt eine schematische Darstellung von Polarisationsebenen der Sende- und Empfangssignale gemäß einem weiteren Ausführungsbeispiel der vorliegenden Erfindung.

Die Bezugszeichen 1001 und 1002 zeigen die Polarisationsebenen des elektrischen Feldes des Sendesignals bzw. des Empfangssignals.

Um die Entkopplung zwischen den Sende- und Empfangseinheiten noch weiter zu verbessern, können die Polarisationsebenen des elektrischen Feldes, also die Sende- und die Empfangspolarisation, geeignet zueinander ausgerichtet werden. Beispielsweise ist eine parallele Ausrichtung der Sende- und Empfangspolarisation vorteilhaft.

Wie in den Figs. 9 und 10 gezeigt, weisen die Antennen für Sender und Empfänger die gleichen Polarisationsebenen auf. In dem Ausführungsbeispiel der Fig. 9 liegen die Polarisationsebenen 901, 902 in einer gemeinsamen Ebene. In dem Ausführungsbeispiel der Fig. 10 liegen die Polarisationsebenen 1001, 1002 in getrennten, parallelen Ebenen, die auf eine Verbindungslinie zwischen den Zentren der Antennen 201, 202 senkrecht stehen..

Die Anordnung der Fig. 10 führt zu einer verbesserten Isolation zwischen Sende- und Empfangsantenne und weist somit auch geringe Störsignalen (direktes Überkoppeln vom Sender in den Empfänger) im Nahbereich auf. Dadurch ist die Messempfindlichkeit in diesem Bereich gesteigert.

Bei zwei Hornantenne mit einem Durchmesser von ca. 18 mm und einem Abstand nebeneinander von ca. 5 mm wurde in Vergleichsversuchen das sog. Klingeln (Störreflexionen im Nahbereich) miteinander verglichen.

Es hat sich gezeigt, dass selbst bei sehr kleinen Echos mit dem modifizierten Sensor bis zu einem Abstand von wenigen Zentimetern zum Antennenrand hin gemessen werden kann. Das reflektierte Signal hat dabei einen guten Signal- zu Störabstand.

Bei anderen Antennen kann es schon bei Abständen von etwa 20 bis 30 cm zu starken Interferenzen kommen, die die Messgenauigkeit negativ beeinflussen können. Bei noch kleineren Abständen war die Reflexion kaum oder gar nicht mehr im Antennenklingeln zu erkennen.

Die Entkopplung der beiden Antennen nimmt mit steigendem Abstand zwischen den Antennen zu. Dadurch wird das Überkoppeln zwischen den Antennen und damit das Klingeln stark verringert. Dazu wurden zwei verschiedene Antennenvarianten (rundes Horn, halbrundes Horn) in verschiedenen Positionen zueinander angeordnet und das Übertragungsverhalten (also die Isolation zwischen Sender und Empfänger) mit einem dreidimensionalen Feldsimulationsprogramm berechnet und anschließend mit einem vektoriellen Netzwerkanalysator gemessen.

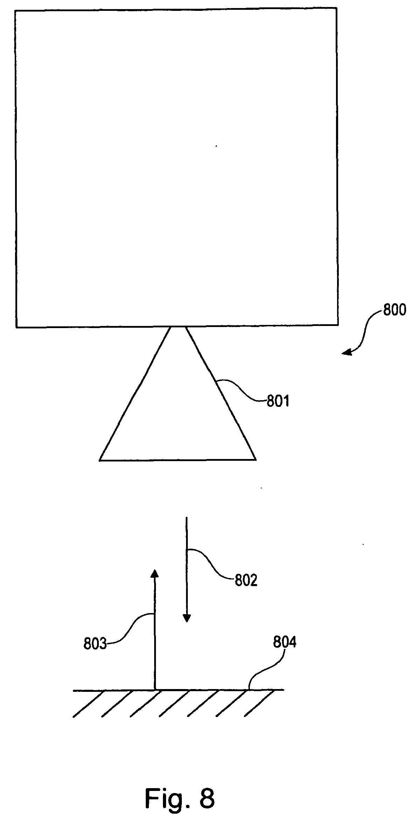

Fig. 8 zeigt eine schematische Darstellung eines Füllstandsradars gemäß einem weiteren Ausführungsbeispiel der vorliegenden Erfindung.

Das Füllstandsradar 800 weist hierbei eine Signalgeneratoreinheit und eine Empfängerschaltung auf. Weiterhin ist eine Antennenvorrichtung 801 (Antennensystem) gemäß einem Ausführungsbeispiel der vorliegenden Erfindung vorgesehen.

Das Antennensystem 801 sendet ein Sendesignal 802 in Richtung Füllgutoberfläche 804, welches als Empfangssignal 803 von der Füllgutoberfläche reflektiert und vom Antennensystem 801 detektiert wird. Hieraus kann dann der Füllstand bestimmt werden.

Ergänzend sei darauf hinzuweisen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Füllstandsensor (800) zur Bestimmung eines Füllstands in einem Behälter und für kurze Entfernungsmessungen, der Füllstandsensor aufweisend:
eine erste Antenne (201) zum Senden eines Sendesignals mit einer ersten Polarisationsebene (1001) zu einer Füllgutoberfläche;
eine zweite Antenne (202) zum Empfangen eines von der Füllgutoberfläche reflektierten Empfangssignals mit einer zweiten Polarisationsebene (1002); und
eine gemeinsame Außenhülle (203) für die erste und die zweite Antenne;
wobei die beiden Polarisationsebenen in getrennten, parallelen Ebenen liegen, die auf einer Verbindungslinie zwischen den Zentren der Antennen senkrecht stehen.

2. Füllstandsensor nach Anspruch 1,
wobei die gemeinsame Außenhülle (203) als ein Gehäuse aufgeführt ist, welches zur Aufnahme der ersten und zweiten Antenne ausgeführt ist.

3. Füllstandsensor nach Anspruch 1 oder 2,
wobei die gemeinsame Außenhülle (203) eine runde, elliptische oder eckige Grundfläche aufweist.

4. Füllstandsensor nach einem der vorhergehenden Ansprüche,
wobei die erste und zweite Antenne (201, 202) jeweils einen runden, elliptischen oder eckigen Öffnungsquerschnitt aufweisen.

5. Füllstandsensor nach einem der vorhergehenden Ansprüche,
wobei die gemeinsame Außenhülle (203) eine zylindrische oder kegelförmige Außenform aufweist.

6. Füllstandsensor nach einem der vorhergehenden Ansprüche,
wobei die ersten und zweiten Antennen (201, 202) als Hornantennen ausgeführt sind.

7. Füllstandsensor nach Anspruch 6,
wobei die erste und zweite Antenne (201, 202) jeweils ein Antennenhorn mit halbkreisförmigem oder halbelliptischem Querschnitt aufweisen.

8. Füllstandsensor nach einem der vorhergehenden Ansprüche, weiterhin aufweisend:
eine vordere Antennenabdeckung;
wobei die vordere Antennenabdeckung eine nach innen gerichtete Wölbung aufweist.

9. Füllstandsensor nach Anspruch 8,
wobei die Wölbung kegelförmig ausgeführt ist.

10. Füllstandsensor nach einem der vorhergehenden Ansprüche,
wobei das Antennensystem zum frontbündigen Einbau in einen Flansch ausgeführt ist.

11. Füllstandsensor nach einem der vorhergehenden Ansprüche, ausgeführt als Füllstandradarsensor.

12. Antennensystem für einen Füllstandsensor nach einem der Ansprüche 1 bis 11 zur Bestimmung eines Füllstands in einem Behälter und für kurze Entfernungsmessungen, das Antennensystem aufweisend:
eine erste Antenne (201) zum Senden eines Sendesignals mit einer ersten Polarisationsebene (1001) zu einer Füllgutoberfläche;
eine zweite Antenne (202) zum Empfangen eines von der Füllgutoberfläche reflektierten Empfangssignals mit einer zweiten Polarisationsebene (1002); und
eine gemeinsame Außenhülle (203) für die erste und die zweite Antenne;
wobei die beiden Polarisationsebenen in getrennten, parallelen Ebenen liegen, die auf einer Verbindungslinie zwischen den Zentren der Antennen senkrecht stehen.

13. Antennensystem nach Anspruch 12,
wobei das Antennensystem einteilig ausgeführt ist.

14. Verwendung eines Füllstandsensors nach einem der Ansprüche 1 bis 11 zur Füllstandsmessung.

15. Verwendung eines Antennensystems nach einem der Ansprüche 12 oder 13 zur Füllstandsmessung.

## Claims

1. A filling level sensor (800) for determining a fill level in a container and for short distance measurements, with the filling level sensor comprising:
a first antenna (201) for transmitting a transmission signal having a first polarization plane (1001) to a material surface;
a second antenna (202) for receiving a reception signal reflected by the material surface having a second polarization plane (1002); and
a common outer enclosure (203) for the first and the second antenna;
wherein the two polarization planes lie in separate, parallel planes, which are arranged perpendicular to a connecting line between the centres of the antennas.

2. The filling level sensor of claim 1,
wherein the common outer enclosure (203) is realized in the form of a housing that is designed for accommodating the first and the second antenna.

3. The filling level sensor of claim 1 or 2,
wherein the common outer enclosure (203) has a round, elliptical or angular base.

4. The filling level sensor of one of the preceding claims,
wherein the first and the second antenna (201, 202) respectively have a round, elliptical or angular aperture cross section.

5. The filling level sensor of one of the preceding claims,
wherein the common outer enclosure (203) has a cylindrical or conical exterior shape.

6. The filling level sensor of one of the preceding claims,
wherein the first and the second antenna (201, 202) are realized in the form of horn antennas.

7. The filling level sensor of claim 6,
wherein the first and the second antenna (201, 202) respectively feature an antenna horn with semicircular or hemiellipsoidal cross section.

8. The filling level sensor of one of the preceding claims, furthermore comprising:
a front antenna cover;
wherein the front antenna cover has an inwardly directed curvature.

9. The filling level sensor of claim 8,
wherein the curvature is realized conical.

10. The filling level sensor of one of the preceding claims,
wherein the antenna system is designed for the flush-front installation into a flange.

11. The filling level sensor of one of the preceding claims realized in the form of a filling level radar sensor.

12. An antenna system for a filling level sensor of one of claims 1 to 11 for determining a fill level in a container and for short distance measurements, with the antenna system comprising:
a first antenna (201) for transmitting a transmission signal having a first polarization plane (1001) to a material surface;
a second antenna (202) for receiving a reception signal reflected by the material surface having a second polarization plane (1002); and
a common outer enclosure (203) for the first and the second antenna;
wherein the two polarization planes lie in separate, parallel planes, which are arranged perpendicular to a connecting line between the centres of the antennas.

13. The antenna system of claim 12,
wherein the antenna system is realized in one piece.

14. The utilization of a filling level sensor of one of claims 1 to 11 for filling level measurements.

15. The utilization of an antenna system of one of claims 12 or 13 for filling level measurements.

## Revendications

1. Capteur de niveau (800) pour la détermination d'un niveau dans un récipient et pour de courtes mesures de distance, le capteur de niveau comprenant:
une première antenne (201) pour émettre un signal d'émission avec un premier plan de polarisation (1001) par rapport à une surface de charge;
une seconde antenne (202) pour recevoir un signal de réception réfléchi par la surface de la charge avec un second plan de polarisation (1002) ; et
une gaine extérieure commune (203) pour la première et la seconde antenne ;
les deux plans de polarisation se situant dans des plans parallèles, séparés, qui se situent perpendiculairement à une ligne de jonction entre les centres des antennes.

2. Capteur de niveau selon la revendication 1,
la gaine extérieure commune (203) étant réalisée sous forme d'un boîtier, conçu pour loger la première et la seconde antenne.

3. Capteur de niveau selon l'une des revendications 1 et 2,
la gaine extérieure commune (203) présentant une surface de base ronde, elliptique ou angulaire.

4. Capteur de niveau selon l'une des revendications précédentes,
la première et la seconde antenne (201, 202) présentant chacune une section transversale d'ouverture ronde, elliptique ou angulaire.

5. Capteur de niveau selon l'une des revendications précédentes,
la gaine extérieure commune (203) présentant une forme extérieure cylindrique ou conique.

6. Capteur de niveau selon l'une des revendications précédentes,
les premières et les secondes antennes (201, 202) étant réalisées sous forme d'antennes à cornet.

7. Capteur de niveau selon la revendication 6,
la première et la seconde antenne (201, 202) présentant chacune une antenne à cornet de section transversale semi-circulaire ou semi-elliptique.

8. Capteur de niveau selon l'une des revendications précédentes, présentant en outre :
un recouvrement antérieur d'antenne ;
le recouvrement antérieur d'antenne présentant un cintrage dirigé vers l'intérieur.

9. Capteur de niveau selon la revendication 8,
le cintrage ayant une réalisation conique.

10. Capteur de niveau selon l'une des revendications précédentes,
le système d'antennes étant réalisé pour l'incorporation en affleurement frontal dans une bride.

11. Capteur de niveau selon l'une des revendications précédentes, réalisé sous forme de capteur radar de niveau.

12. Système d'antennes pour un capteur de niveau selon l'une des revendications 1 à 11, pour la détermination d'un niveau dans un récipient et pour de courtes mesures de distance, le système d'antennes présentant :
une première antenne (201) pour émettre un signal d'émission avec un premier plan de polarisation (1001) par rapport à une surface de charge ;
une seconde antenne (202) pour recevoir un signal de réception réfléchi par la surface de charge avec un second plan de polarisation (1002) ; et
une gaine extérieure commune (203) pour la première et la seconde antenne ;
les deux plans de polarisation se situant dans des plans parallèles, séparés, qui se situent perpendiculairement à une ligne de jonction entre les centres des antennes.

13. Système d'antennes selon la revendication 12,
le système d'antennes ayant une réalisation monobloc.

14. Utilisation d'un capteur de niveau selon l'une des revendications 1 à 11 pour la mesure de niveau.

15. Utilisation d'un système d'antennes selon l'une des revendications 12 et 13 pour la mesure de niveau.
